**Europäisches Patentamt**

**European Patent Office**

**Office européen des brevets**

(19)

(11) Veröffentlichungsnummer: **0 099 934**
**B1**

# EUROPÄISCHE PATENTSCHRIFT

(12)

(45) Veröffentlichungstag der Patentschrift:
14.10.87

(21) Anmeldenummer: 82105273.5

(22) Anmeldetag: 16.06.82

(51) Int. Cl.⁴: **H 01 R 13/629**, H 01 R 13/631,
**H 01 R 13/637**, G 01 K 7/02

(54) **Hydraulisch betätigte Vorrichtung zur zeitweiligen Herstellung eines Steckanschlusses eines Messelements an einen Messkreis.**

(30) Priorität: 23.07.82 DE 3130465

(43) Veröffentlichungstag der Anmeldung:
08.02.84 Patentblatt 84/6

(45) Bekanntmachung des Hinweises auf die Patenterteilung:
14.10.87 Patentblatt 87/42

(84) Benannte Vertragsstaaten:
BE FR GB IT LU NL SE

(56) Entgegenhaltungen:
DE-A-2 317 419
DE-A-2 330 664
DE-B-1 202 374

(73) Patentinhaber: MANNESMANN Aktiengesellschaft,
Mannesmannufer 2, D-4000 Düsseldorf 1 (DE)

(72) Erfinder: Keutgen, Franz, Karweg, D-5543
Lissendorf (DE)
Erfinder: Sonnen, Paul, Schulstrasse 4, D-5543
Lissendorf (DE)
Erfinder: Theis, Richard, Hauptstrasse 4, D-5489
Senscheid (DE)

(74) Vertreter: Meissner, Peter E., Dipl.- Ing., Meissner
& Meissner Patentanwälte Herbertstrasse 22,
D-1000 Berlin 33 Grunewald (DE)

EP 0 099 934 B1

## Beschreibung

Die Erfindung betrifft eine hydraulisch betätigte Vorrichtung zur zeitweiligen Herstellung eines elektrischen Steckkontaktanschlusses eines an einem warmgängigen metallurgischen Gefäß ständig angebrachten, mit einem ortsfesten elektrischen Kupplungsteil versehenen elektrischen Meßelements, insbesondere Temperaturmessers, an einen Meßkreis.

Die Betätigung von Geräten, die zum Beispiel zum Messen der Temperatur eines metallurgischen Gefäßes, wie zum Beispiel einer Gießpfanne, während des Betriebes dienen, erfolgt bis jetzt manuell. In den erschwerten Bedingungen, die im metallurgischen Betrieb herrschen, ist die Handhabung außerordentlich schwierig.

Aufgabe der Erfindung ist es, eine Vorrichtung der eingangs genannten Art zu finden, die die zeitweilige Herstellung eines zuverlässigen Anschlusses eines Meßelements an den Meßkreis ohne manuelle Eingriffe ermöglicht.

Diese Aufgabe wird erfindungsgemäß durch die Merkmale des Kennzeichenteils des einzigen Patentanspruchs gelöst.

In den beigefügten Zeichnungen ist ein Ausführungsbeispiel der Erfindung dargestellt.

Es zeigt:

Fig. 1 ein Hydraulik-Schaltbild der erfindungsgemäßen Vorrichtung

Fig. 2 einen teilweisen Längsschnitt der erfindungsgemäßen Vorrichtung in entkuppelter Stellung,

Fig. 3 die Vorrichtung gemäß Fig. 2 in gekuppelter Stellung,

Fig. 4 die erfindungsgemäße Vorrichtung beim Kupplungsvorgang,

Fig. 5 eine Hinteransicht der Vorrichtung gemäß Fig. 4.

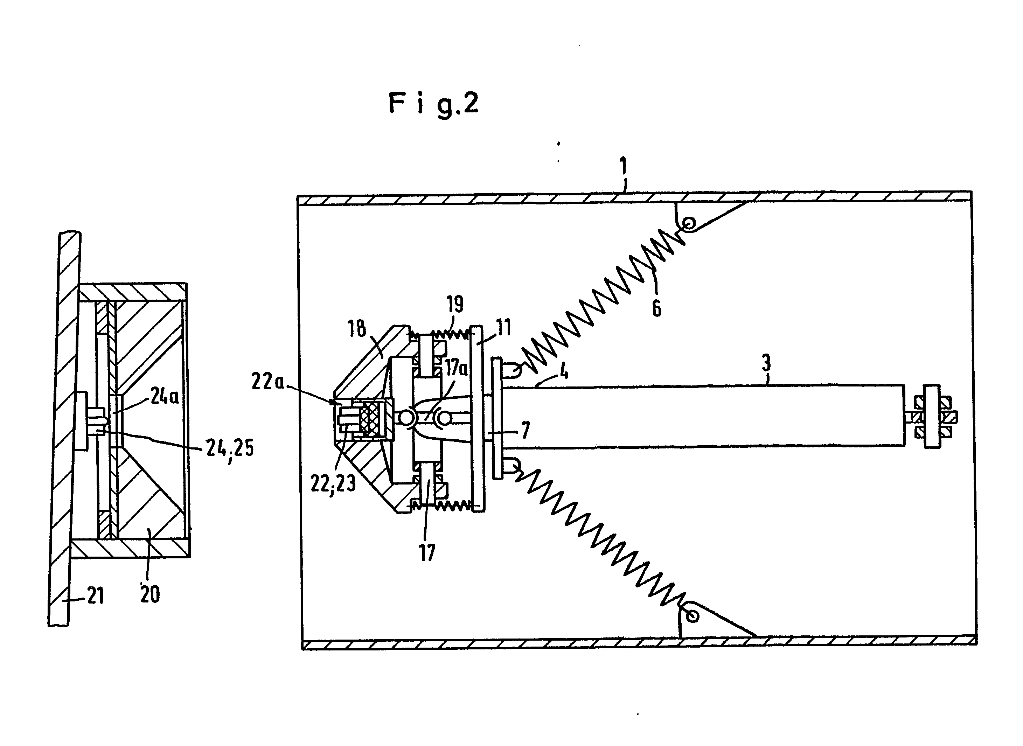

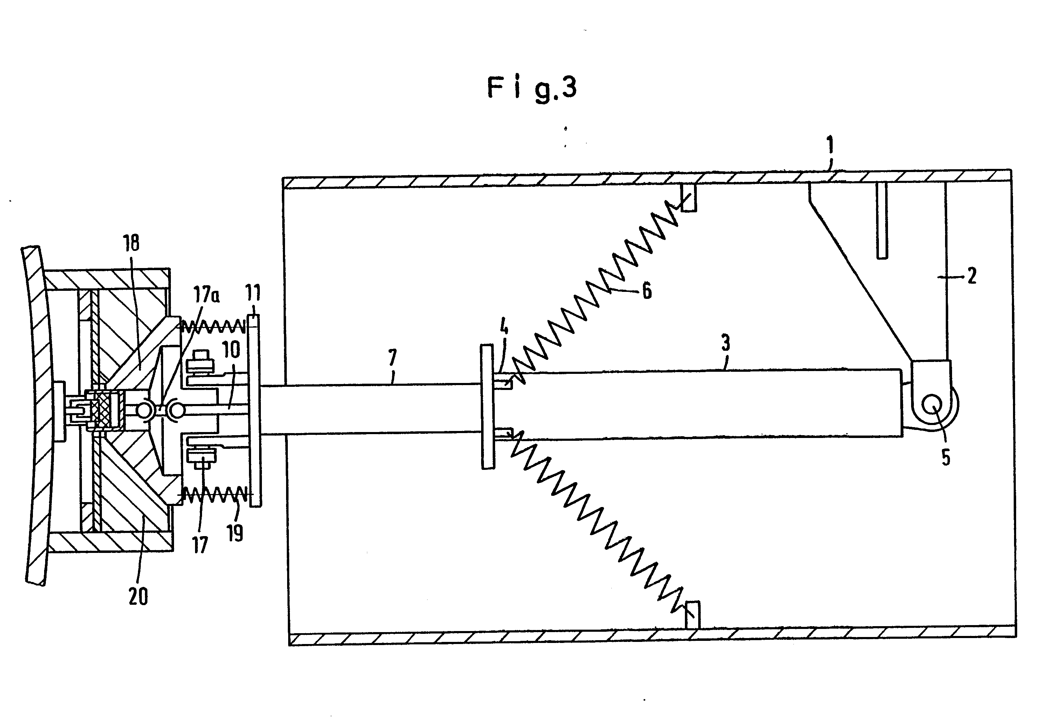

In einem zylindrischen Gehäuse 1 (Fig. 2 bzw. 3) ist auf einem Bock 2 das Ende eines hydraulischen Zylinders 3 im Kugelgelenk 5 gelagert, so daß das entgegengesetzte, freie Ende 4 des Zylinders 3 drei Freiheitsgrade aufweist. Das Zylinderende 4 ist mit Hilfe von drei radial angeordneten Federn 6 in seiner mittigen Lage im Gehäuse 1 gehalten.

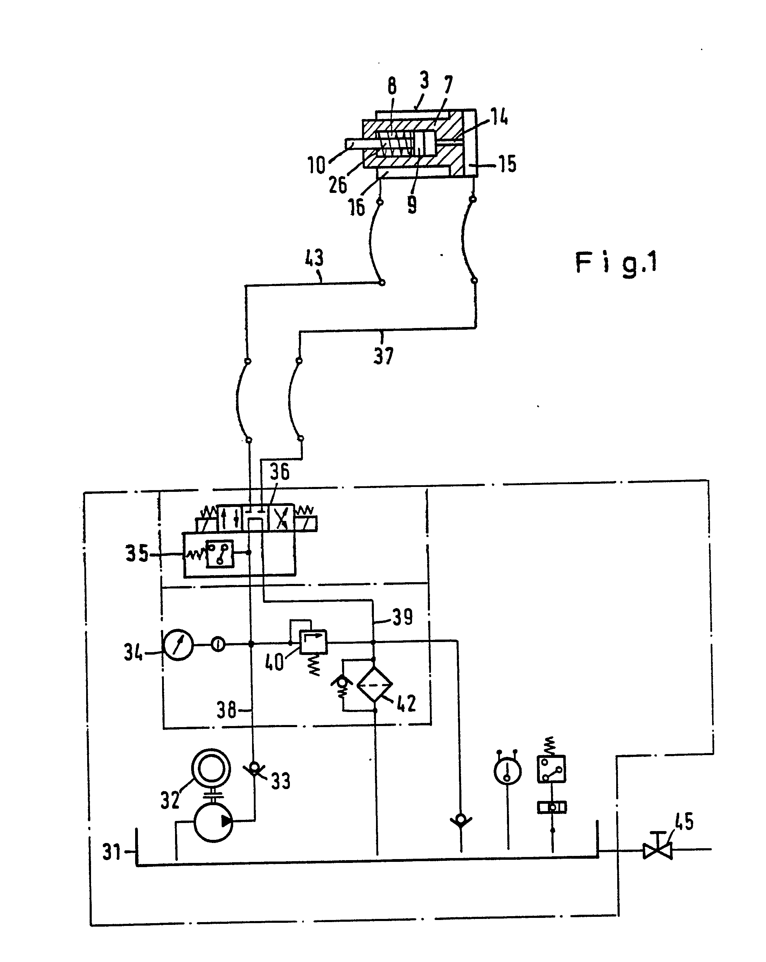

Im Zylinder 3 ist ein doppeltwirkender, hohler Differentialkolben 7 (Fig. 1) axialbeweglich angeordnet.

Am abtriebsseitigen Ende des Differentialkolbens 7 ist ein Flansch 11 senkrecht zur Achse des Kolbens 7 fest angeordnet.

In der im Differentialkolben 7 vorgesehenen Axialbohrung arbeitet ein Plunger 9, der in der Ruhestellung am Boden des hohlen Differentialkolbens 7 durch eine Druckfeder 26 gehalten wird. Eine koaxial angeordnete, mit dem Plunger 9 fest verbundene Stange 10 ragt abtriebsseitig aus dem Differentialkolben 7, durch den Flansch 11 hindurch, heraus.

Der Arbeitsraum des Plungers (Bohrung 8) ist antriebsseitig über einen Kanal 14 mit der an der Leitung 37 angeschlossenen antriebsseitigen Kammer 15 des Zylinders 3 verbunden. Die abtriebsseitige Kammer des Zylinders 3 ist an eine Leitung 43 angeschlossen.

Mit dem Flansch 11 ist über Gelenkglieder 17 und 17a ein kegelförmiger Kupplungsteil 18 verbunden, dessen Gewicht durch mehrere, über den Umfang des am Ende des Differentialkolbens 7 angeordneten Flansches 11 verteilt und parallel zu seiner Achse angeordnete Federn 19 gehalten wird. Die Federn 19 sind derart bemessen und angeordnet, daß das Gewicht des Kupplungsteils 18 in neutraler (mittlerer) Stellung (in unbelastetem Zustand) kompensiert wird. So fungieren die an der oberen Hälfte des Kupplungsteils 18 angeordneten Federn als Zugfedern, während die unteren Federn mit Druck belastet sind.

Die Kegelform der Funktionsoberfläche des Kupplungsteils 18 entspricht der Form des Gegenstücks, nämlich des ortsfesten Kupplungsteils 20, welcher am Mantel 21 des warmgängigen Gefäßes fest angeordnet ist.

Wie aus Fig. 2 bzw. 3 ersichtlich ist, ist in der Achse des beweglichen Kupplungsteils 18 eine axiale Bohrung 22a vorgesehen, in der ein 2-poliges Kontaktstück 22, 23 verschiebbar angeordnet ist. Dieses Kontaktstück wirkt mit dem ortsfesten Anschlußstück 24, 25 zusammen, welches im ortsfesten Kupplungsteil 20 koaxial angeordnet ist, wobei in der Achse des Kupplungsteils 20 eine Bohrung 24a mit einem Durchmesser vorgesehen ist, der größer als der Durchmesser des Kontaktstücks 22, 23 ist.

Die genaue Anordnung des beweglichen sowie des festen Kontaktstückes kann ebenfalls aus Fig. 2 ersehen werden. Der zylinderseitig angeordnete Kontakt besteht aus zwei Rollen 22 und 23, und das pfannenseitig angeordnete Kontaktstück besteht ebenfalls aus zwei entsprechend angeordneten Rollen 24 und 25.

Das Kontaktstück 22, 23 ist über ein Gelenkglied 17a mit der Plungerstange 10 verbunden. Wenn das Kupplungsteil 18 in den Sitz des Kupplungsteiles 20 durch die Kolbenstange 7 gedrückt und dabei zentriert wird, wird durch den fortsetzenden Druckanstieg der Plunger 9 gegen die Kraft der Druckfeder 26 (Fig. 1) ausgeschoben und die Kontakte 22, 23 und 24, 25 ineinandergeschoben. Für die eigentliche Messung wird ein Thermoelement verwendet, das in der Ausmauerung der Pfanne eingebaut und durch Leitungen mit dem Kontaktstück 24, 25 verbunden. Das Thermoelement sowie die Leitungen sind in den Zeichnungen nicht dargestellt. An einer ebenfalls nicht dargestellten stationären Meßwarte wird die der Temperatur, die durch das Thermoelement gemessen wird, entsprechende Spannung abgefragt.

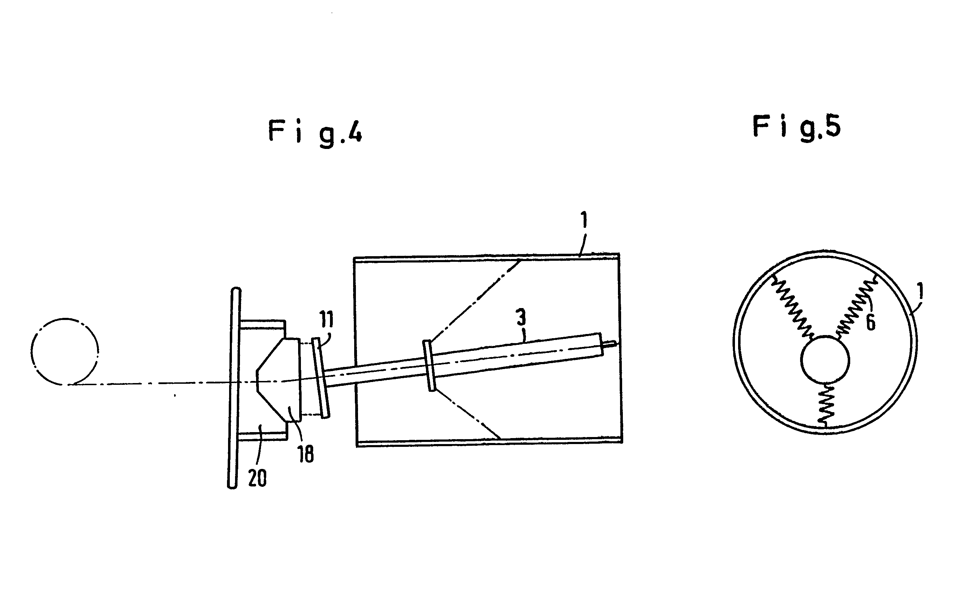

Die kugelgelenkige Lagerung des Zylinders 3 im Gehäuse 1 und seine mittige Ausrichtung mit Hilfe der Federn 6 (Fig. 5) und die Form der Auflageflächen der beiden Kupplungsteile 18 und 20 mit den Gelenken 17, 17a (kardanische Aufhängung) und den Federn 19 ermöglicht ein genaues Zentrieren des beweglichen Kupplungsteils 18 gegenüber dem Kupplungsteil 20 und damit ein präzises Einführen des 2-poligen Kontaktstücks in das Gegenstück für die Herstellung des Anschlusses. Durch die Wirkung der kardanischen Aufhängung (Gelenke 17, 17a) kann sich die Lage der Plungerstange 10 dem Kontaktstück 22, 23 anpassen (Fig. 4).

Wie Fig. 1 zeigt, ist mit 31 ein Hydraulik-Behälter und mit 32 ein an einer Zuleitung 38 der Druckflüssigkeit angeschlossenes Pumpe-Motor-Aggregat bezeichnet.

In der Leitung 38 ist ein Manometer 34 sowie ein Druckschalter 35 und ein Steuerventil 36 eingebaut. An das Steuerventil ist auch die Rückleitung 39 angeschlossen. Ausgangsseitig ist das Steuerventil 36 mit den Hydraulik-Leitungen 43 und 37 verbunden.

In der Rückleitung 39 ist ein Filter 42 eingebaut. Die Rückleitung 39 mündet in den Hydraulik-Behälter 31 ein.

Ein überdruckventil 40 verbindet die Druck-Zuleitung 38 mit der Rückleitung 39. Die Zuleitung 38 ist über das Steuerventil 26 und die hydraulischen Leitungen 43 und 37 mit der antriebsseitigen Kammer 15 oder der abtriebsseitigen Kammer 16 des im Differentialkolben 7 vorgesehenen Arbeitsraumes zu- und abschaltbar verbunden.

Die Arbeitsweise der erfindungsgemäßen Vorrichtung ist wie folgt:

Nach entsprechender Schaltung des Steuerventils 36, das in Fig. 1 in Ruhelage gezeichnet ist, strömt die Flüssigkeit, gefördert durch die Pumpe 32, aus dem Behälter 31 über die Leitung 38 und das Steuerventil 36 über die Leitung 37 in die antriebsseitige Kammer 15 des hydraulischen Zylinders 3. Der Differentialkolben 7 bewegt sich nach links, bis der Kupplungsteil 18 mit seinem Kegel in dem ortsfesten Kupplungsteil 20 anliegt.

Weil die Pumpe weiterarbeitet, baut sich in der antriebsseitigen Kammer 15 ein Druck auf, der - nachdem er eine vorbestimmte Größe erreicht hat, bewirkt, daß der Plunger die Kraft der entgegenwirkenden Druckfeder 26 überwindet. Der Plunger 9 mit der Plungerstange 10 fährt heraus und bewirkt das Einrasten der zusammenwirkenden Kontaktstücke 22, 23 und 24, 25. Dabei ermöglichen die Federanordnungen 6 und 19 sowie die Kugelgelenke 5 und 17, daß die beiden Kontaktstücke 22, 23 und 24, 25 genau in einer Achse liegen. Durch die Federn 6 und 19 kann sich nämlich der Zylinder 3 sowie der bewegliche Kupplungsteil 18 zentrieren, wobei beim Anliegen des Kegels in der im ortsfesten Kupplungsteil 20 vorgesehenen kegeligen Senkung die Achse des beweglichen Kupplungsteils 18 durch die Kegelwirkung genau ausgerichtet wird. Dadurch können die Kontaktstücke 22, 23 und 24, 25 genau ineinandergeschoben werden.

## Patentansprüche

Hydraulisch betätigte Vorrichtung zur zeitweiligen Herstellung elektrischen eines Steckkontaktanschlusses eines an einem warmgängigen metallurgischen Gefäß (1) ständig angebrachten, mit einem ortsfesten elektrischen Kupplungsteil (20) versehenen elektrischen Meßelementes, insbesondere eines Temperaturmessers, an einen Meßkreis, dadurch gekennzeichnet, daß in einem zylindrischen Gehäuse (1) ein druckmittelbetätigter, antriebsseitig im Gehäuse (1) bei (5) kugelgelenkig gelagerter Zylinder (3) angeordnet ist, wobei das freie Zylinderende (4) mit Hilfe von Federn (6) in mittiger Lage gegenüber dem Gehäuse (1) gehalten ist, daß in dem druckmittelbetätigten Zylinder (3) ein mit einer axialen Bohrung (8) versehener doppeltwirkender Differentialkolben (7) axial bewegbar angeordnet ist, an dessen freiem Ende ein kegelförmiges elektrisches Kupplungsteil (18) einer elektrischen Schaltkupplung in einer kardanischen Aufhängung mit Gelenken (17, 17a) angeordnet ist, welches mit Hilfe von Federn (19) in mittiger Lage gehalten ist und mit dem ortsfesten, mittig in einem dem beweglichen, kegelförmigen elektrischen Kupplungsteil (18) entsprechenden, am Mantel (21) des warmgängigen Gefäßes befestigten, kegelig ausgesenkten elektrischen Kupplungsteil (20) zusammenwirkt, daß in der im Differentialkolben (7) vorgesehenen Bohrung (8) ein nach der Schließung der elektrischen Kupplung (18, 20) gegen den Druck einer in der Bohrung (8) angeordneten Druckfeder (26) antriebsseitig druckmittelbeaufschlagbarer Plunger (9) axial bewegbar angeordnet ist, welcher mit einer den abtriebsseitigen Deckel (27) des Differentialkolbens durchsetzenden Stange (10) verbunden ist, mit der ein in einer in dem beweglichen, kegelförmigen elektrischen Kupplungsteil (18) mittig angeordneten Bohrung (22a) axial verschiebbarer, an einer Meßwarte elektrisch angeschlossener Kontakt (22, 23) gelenkig verbunden ist, der mit einem entsprechenden, am Mantel (21) des warmgängigen Gefäßes befestigten, in einer im kegelig ausgesenkten elektrischen Kupplungsteil (20) vorgesehenen Bohrung (24a) angeordneten, an einem in der Gefäßwand eingebauten elektrischen Messelement angeschlossenen Kontakt (24, 25) zusammenwirkt.

## Claim

Hydraulically actuated device for the temporary production of an electrical plug contact connection of an electrical measurement element which is provided with a fixed electrical coupling piece (20) and is continually applied to a metallurgical vessel (1) undergoing a range of temperatures, in particular of a temperature gauge, to a measuring circuit,

characterized in that

in a cylindrical housing (1) a cylinder (3) is arranged, which is actuated by pressure medium and is mounted on the drive side in the housing (1) by ball pivot at (5), whereby the free cylinder end (4) is held in central position with respect to the housing (1) by means of springs (6),

that in the cylinder (3) which is actuated by pressure medium, a double-acting differential piston (7) which is provided with an axial bore (8) is arranged so as to be axially movable, on the free end of which a tapered electrical coupling piece (18) of an electrical clutch coupling is arranged in a cardanic suspension with joints (17,17a), which piece is held in a central position by means of springs (19) and cooperates with the fixed electrical coupling piece (20) which is centrally countersunk in tapered form, said piece (20) corresponds to the movable, tapered electrical coupling piece (18), and attached to the casing (21) of the vessel undergoing a range of temperatures, that in the bore (8) which is provided in the differential piston (7) a plunger (9) is arranged so as to be axially movable, which plunger is able to be acted upon by pressure medium on the drive side after the closure of the electrical coupling (18, 20) against the pressure of a pressure spring (26) arranged in the bore (8), and which plunger is connected with a rod (10) which penetrates the cover (27) of the differential piston on the output end, with which rod a contact (22, 23) is articulatedly connected, which is axially displaceable in a centrally arranged bore (22a) in the movable, tapered electrical coupling piece (18) and is electrically connected to a measurement station, and which contact cooperates with a corresponding contact (24, 25) which is attacted to the casing (21) of the vessel exposed to heat and is arranged in a bore (24a) provided in the electrical coupling piece (20) which is countersunk in tapered form, and which contact is connected to an electrical measurement element which is incorporated in the vessel wall.

**Revendication**

Dispositif actionné hydrauliquement pour l'établissement temporaire d'une connexion électrique du type contact à fiches d'un élément de mesure électrique, en particulier un mesureur de température, à un circuit de mesure, ledit élément de mesure étant muni d'une partie de couplage électrique fixe (20) et étant monté de façon permanente sur un récipient métallurgique conducteur de chaleur, caractérisé en ce que, dans un logement cylindrique (1), est disposé un cylindre (3) actionné par pression, monté du côté de commande dans le logement (1) par une rotule (5), l'extrémité libre (4) de cylindre étant maintenue en position centrale par rapport au logement (1) à l'aide de ressorts (6), en ce que, dans le cylindre (3) actionné par pression, est disposé, de façon axialement mobile, un piston différentiel (7) à double effet muni d'un aléssge axial (8), à l'extrémité libre duquel est disposée une partie de couplage électrique conique (18) d'un couplage de commutation électrique dans une suspension à la Cardan à l'aide de joints (17, 17a), laquelle est maintenue en position centrale à l'aide de ressorts (19), et coopère avec la partie de couplage électrique fixe (20) évidée en cône, fixée à la paroi (21) du récipient conducteur de chaleur, et correspondant à la partie de couplage électrique conique mobile (18), en ce que, dans l'alésage (8) prévu dans le piston différentiel (7), est disposé, de façon axialement mobile, un piston plongeur (9) qui peut être alimenté par un moyen de pression du côté de commande contre la force d'un ressort de pression (26) disposé dans l'alésage (8) après la fermeture du couplage électrique (18, 20), lequel piston plongeur est relié à una tige (10), traversant le couvercle (27) du côté de sortie du piston différentiel, à laquelle est relié, de façon articulée, un contact (22, 23), électriquement relié à un poste de mesure, et qui peut être déplacé axialement dans un alésage (22a) disposé de façon centrale dans la partie de couplage électrique mobile conique (18), lequel contact coopère avec un contsct (24, 25) correspondant, fixé à la paroi (21) du récipient conducteur de chaleur, disposé dans un alésage (24a) prévu dans la partie de couplage électrique évidée en cône (20), et relié à un élément de mesure monté dans la paroi du récipient.

Fig.1

Fig.2

# Fig.3

0 099 934

# Fig.4

# Fig.5

0 099 934